(19) **Europäisches Patentamt / European Patent Office / Office européen des brevets**

(11) **EP 4 756 709 A1**

(12) **EUROPEAN PATENT APPLICATION**
published in accordance with Art. 153(4) EPC

(43) Date of publication:
**10.06.2026 Bulletin 2026/24**

(21) Application number: **24848399.2**

(22) Date of filing: **02.08.2024**

(51) International Patent Classification (IPC):
***G06T 7/00*** *(2017.01)*

(52) Cooperative Patent Classification (CPC):
**G06T 7/00; G06T 7/20**

(86) International application number:
**PCT/CN2024/109629**

(87) International publication number:
**WO 2025/026446 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.08.2023 CN 202310969399**

(71) Applicant: **Shining 3D Tech Co., Ltd.
Hangzhou, Zhejiang 311258 (CN)**

(72) Inventors:
• **FU, Xiaopeng
Hangzhou, Zhejiang 311258 (CN)**
• **ZHAO, Xiaobo
Hangzhou, Zhejiang 311258 (CN)**
• **CHEN, Xiaojun
Hangzhou, Zhejiang 311258 (CN)**
• **MA, Chao
Hangzhou, Zhejiang 311258 (CN)**

(74) Representative: **Metida
Gyneju str. 16
01109 Vilnius (LT)**

(54) **DATA PROCESSING METHOD AND APPARATUS, DEVICE, AND MEDIUM**

(57) The present disclosure relates to a data processing method, an apparatus, a device, and a medium. The method includes: acquiring a plurality of closing motion trajectories of a mandible of a user; acquiring a plurality of intersection points between each of a plurality of preset planes and the plurality of closing motion trajectories; determining the highest density point from the plurality of intersection points for each preset plane; and obtaining a muscular closure path by connecting the multiple highest density points corresponding to the plurality of the preset planes.

```
┌────────────────────────────────────────────────────────────────────┐
│   Acquire multiple closing motion trajectories of a mandible of a    │──── 101
│   user                                                               │
└────────────────────────────────────────────────────────────────────┘
                              │
                              ▼
┌────────────────────────────────────────────────────────────────────┐
│   Acquire multiple intersection points between each of multiple      │──── 102
│   preset planes and the multiple closing motion trajectories         │
└────────────────────────────────────────────────────────────────────┘
                              │
                              ▼
┌────────────────────────────────────────────────────────────────────┐
│   Determine a highest density point from the multiple intersection   │──── 103
│   points for each preset plane                                       │
└────────────────────────────────────────────────────────────────────┘
                              │
                              ▼
┌────────────────────────────────────────────────────────────────────┐
│   Obtain a muscular closure path by connecting the multiple highest  │──── 104
│   density points corresponding to the multiple preset planes         │
└────────────────────────────────────────────────────────────────────┘
```

FIG. 1

## Description

The present application claims the priority to Chinese patent application with application No. 202310969399.3, filed on August 2, 2023, in China National Intellectual Property Administration, entitled "Data Processing Method, Apparatus, Device, and Medium" the content of which is hereby incorporated herein fully by reference into the present application for all purposes.

## Technical Field

The present application relates to a field of data processing technology, and specifically to a data processing method, an apparatus, a device, and a medium.

## BACKGROUND

The muscular closure path plays an important role in determining dental occlusion relationships, determining tooth wear, and evaluating temporomandibular joint function.

In related technologies, methods for obtaining the muscular closure path are as follows: Solution 1: Obtaining the size of the muscular closure path through the finger method. In this method, fingers or special measuring instruments are used to measure the distance between the maxilla and mandible when the patient bites, thereby deriving the size of the muscular closure path. However, as the accuracy of measurement is influenced by the doctor's experience and skill level, errors may exist, resulting in an insufficiently accurate obtained muscular closure path. Furthermore, the finger method can only measure the size of the muscular closure path and cannot obtain information such as its shape. Solution 2: Obtaining the size of the muscular closure path through the occlusal film method. In this method, special pigment is applied to the surfaces of the maxillary and mandibular teeth, and the patient bites, with the wear degree of the pigment used to judge the size of the muscular closure path. However, the wear degree of the pigment may be affected by various factors such as the type of pigment and the patient's biting force, potentially leading to errors and insufficient accuracy of the obtained muscular closure path. Furthermore, the occlusal film method is similarly limited to measuring the magnitude of the muscular closure path and cannot obtain information such as its shape. Solution 3: Obtaining the muscular closure path through the electrical measurement method. In this method, special electrical measurement instruments are used to measure the resistance value between the maxilla and mandible when the patient bites, thereby measuring the muscular closure path. However, the electrical measurement method requires special equipment, has high operational difficulty, lacks simplicity in the operation process, and demands a high level of professional knowledge.

## SUMMARY

To solve the above technical problems, the present disclosure provides a data processing method, an apparatus, a device, and a medium.

In a first aspect, an embodiment of the present disclosure provides a data processing method, including:

> acquiring a plurality of closing motion trajectories of a mandible of a user;
> acquiring a plurality of intersection points between each of a plurality of preset planes and the plurality of closing motion trajectories;
> determining the highest density point from the plurality of intersection points for each preset plane;
> obtaining a muscular closure path by connecting the multiple highest density points corresponding to the plurality of the preset planes.
> In a second aspect, an embodiment of the present disclosure provides a data processing apparatus, including:
> an acquisition module, configured to acquire a plurality of closing motion trajectories of a mandible of a user;
> a processing module, configured to a plurality of intersection points between each of a plurality of preset planes and the plurality of closing motion trajectories;
> a determination module, configured to determine a highest density point from the plurality of intersection points for each preset plane;
> a generation module, configured to obtain a muscular closure path by connecting the multiple highest density points corresponding to the plurality of the preset planes.

In a third aspect, an embodiment of the present disclosure provides an electronic device, comprising: a processor; a memory configured to store executable instructions for the processor; wherein the processor is configured to read the executable instructions from the memory and execute the executable instructions to implement the data processing method according to the first aspect.

In a fourth aspect, an embodiment of the present disclosure provides a computer-readable storage medium, storing a computer program, wherein the computer program, when executed by a processor, implements the data processing method according to the first aspect.

Compared with the prior art, the technical solutions provided by the embodiments of the present disclosure have the following advantages: By acquiring multiple closing motion trajectories of a user, acquiring multiple intersection points between each preset plane and the multiple closing motion trajectories, determining a highest density point from the multiple intersection points for each preset plane, and then connecting the multiple highest density points corresponding to the multiple preset planes to obtain a muscular closure path. It is possible to calculate the muscular closure path based on the motion trajectories, thereby improving the accuracy of obtaining the muscular closure path. Furthermore, the operation process is simple, non-contact measurement is achieved, reducing discomfort for the measured user.

**BRIEF DESCRIPTION OF THE DRAWINGS**

The accompanying drawings, which are incorporated into and constitute a part of this specification, illustrate embodiments consistent with the present application and, together with the description, serve to explain the principles of the present application.

To describe the technical solutions in the embodiments of the present disclosure or in the prior art more clearly, the following briefly introduces the accompanying drawings required for describing the embodiments or the prior art. Obviously, the accompanying drawings in the following description show merely some embodiments of the present disclosure, and a person of ordinary skill in the art may still derive other drawings from these accompanying drawings without creative efforts.

FIG. 1 is a flowchart illustrating a data processing method according to an embodiment of the present disclosure.
FIG. 2 is a flowchart illustrating another data processing method according to an embodiment of the present disclosure.
FIG. 3 is a schematic diagram illustrating markers according to an embodiment of the present disclosure.
FIG. 4 is a structural diagram illustrating a data processing apparatus according to an embodiment of the present disclosure.

**DETAILED DESCRIPTION**

To make the objectives, technical solutions, and advantages of the present disclosure clearer, the solutions of the present disclosure will be further described below. It should be noted that the embodiments of the present disclosure and the features in the embodiments may be combined with each other without conflict.

Many specific details are set forth in the description below to facilitate a full understanding of the present disclosure. However, the present disclosure may also be implemented in other ways different from those described herein. Obviously, the embodiments in the specification are only a part of the embodiments of the present disclosure, not all of them.

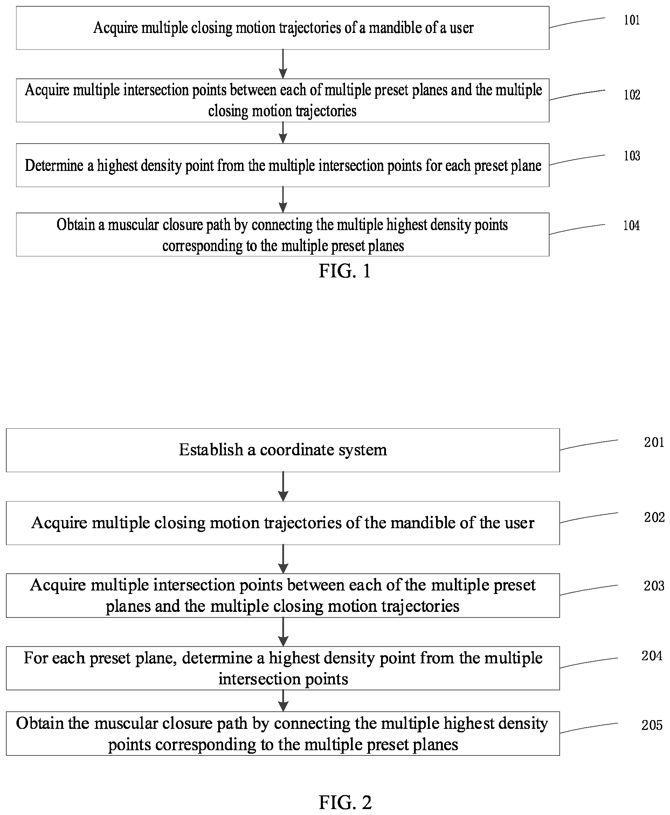

FIG. 1 is a flowchart illustrating a data processing method according to an embodiment of the present disclosure. The method provided by this embodiment may be executed by a data processing apparatus, which may be implemented in software and/or hardware and integrated on any electronic device with computing capability.

As shown in FIG. 1, the data processing method provided by the embodiment of the present disclosure may include:
Step 101, multiple closing motion trajectories of a mandible of a user are acquired.

The method of this embodiment may be applied to obtain a user's muscular closure path.

In some embodiments of the present disclosure, relevant acquisition equipment is used to collect the mandibular motion trajectories during the user closing his mouth. For each closing process, one closing motion trajectory may be collected. N closing motion trajectories of the mandible of the user may be collected after the user closing his mouth for N times.

As an example, for a user's single mouth-opening and closing process, when the user opening the mouth and then closing the mouth, the mandible moves forward and upward along a direction of action of the jaw elevators. The motion trajectory of the user's mandible during this process may be collected. The motion trajectory includes an opening motion trajectory and a closing motion trajectory, which have different directions. Therefore, based on the direction of the motion trajectory, the opening motion trajectory is deleted, and the closing motion trajectory remained, thereby obtaining one closing motion trajectory of the mandible of the user.

Step 102, multiple intersection points between each of multiple preset planes and the multiple closing motion trajectories are acquired.

In some embodiments of the present disclosure, a coordinate system may be established based on user facial features, and multiple preset planes may be selected within the coordinate system. For example, multiple planes parallel to a alare-tragion line are selected as the preset planes.

The preset planes are used to cut the closing motion trajectories of the mandible. For each preset plane, each closing motion trajectory has one intersection point with that preset plane. Therefore, for n closing motion trajectories, each preset plane has n intersection points with the n closing motion trajectories. The intersection points may be represented by coordinates within the coordinate system.

Step 103, a highest density point from the multiple intersection points is determined for each preset plane.

In some embodiments of the present disclosure, for each preset plane, one highest density point may be determined. For example, for n closing motion trajectories of the mandible of the user, a plane has n intersection points with the n closing motion trajectories. The n intersection points are discrete points. The highest density point is determined from the n discrete points. Optionally, the highest density point among the multiple intersection points may be determined by a sum of distances between a certain intersection point and other intersection points.

The calculation process for the highest density point is explained below with an example.

As an example, determining the highest density point from the multiple intersection points includes: for each intersection point, determining distances from the intersection point to the other intersection points among the multiple intersection points; performing a weighted average of the distances from that intersection point to the other intersection points according to a Gaussian distribution function and obtaining a density metric value for the intersection point; then, respectively calculating the density metric values for the multiple intersection points; and determining the intersection point with the largest density metric value from the multiple intersection points as the highest density point.

In this example, for the n intersection points between a preset plane and the n closing motion trajectories, any one intersection point is denoted as p, and other intersection points among the n intersection points excluding point p are denoted as i. The distance from point p to other intersection points i is calculated, and the weighted average is performed according to the Gaussian distribution function to find the point with the smallest sum of distances, thereby determining the highest density point. The calculation formula for the density metric value of the point p is as follows:

$$D_p = \frac{n}{\sum_n^i \|C_i - C_p\|_2^\sigma}$$

Where Dp represents the density metric value of point p, Cp represents the coordinates of point p, Ci represents the coordinates of point i, σ represents a parameter affecting the influence of point aggregation degree on the final result, with σ ranging from (0, 1], for example, σ = 0.3.

It should be noted that the above formula is only one way to calculate the highest density point and is not specifically limited here.

Thus, for each preset plane, one highest density point is determined from the n intersection points. For M preset planes, M highest density points may be obtained.

Step 104, a muscular closure path is obtained by connecting the multiple highest density points corresponding to the multiple preset planes.

In some embodiments of the present disclosure, taking M preset planes as an example, the M highest density points are connected to obtain the muscular closure path. The muscular closure path may be used to determine dental occlusion relationships, determine tooth wear, evaluate temporomandibular joint function, etc.

According to the technical solution of this embodiment of the present disclosure, by acquiring multiple closing motion trajectories of the mandible of the user, acquiring multiple intersection points between each preset plane and the multiple closing motion trajectories, determining a highest density point from the multiple intersection points for each preset plane, and then connecting the multiple highest density points corresponding to the multiple preset planes to obtain the muscular closure path, it is possible to calculate the muscular closure path based on the motion trajectories of the mandible, thereby improving the accuracy of obtaining the muscular closure path. Furthermore, the operation process is simple, non-contact measurement is achieved, reducing discomfort for the measured user.

A specific implementation process is described below.

FIG. 2 is a flowchart illustrating another data processing method according to an embodiment of the present disclosure. As shown in FIG. 2, the method includes the following steps:

Step 201, a coordinate system is established.

In some embodiments of the present disclosure, the coordinate system is established as follows: Acquire three-dimensional facial data of the user, and based on the three-dimensional facial data, determine an intersection point of a midsagittal plane and the mandibular alveolar ridge crest line, an alar point, a tragion point, a left exocanthion point, and a right exocanthion point. Then, use the intersection point of the midsagittal plane and the mandibular alveolar ridge crest line as the coordinate origin O, use a line connecting the alar point and the tragion point as the X-axis, and use a line connecting the left exocanthion point and the right exocanthion point as the Z-axis to establish the coordinate system.

The midsagittal plane is a plane determined by a glabella point, a pronasale point, and a pogonion point. As an example, a scanner is used to obtain the user's three-dimensional facial data to determine the facial features such as the glabella point, the pronasale point, the pogonion point, the alar point, the tragion point, the left exocanthion point, and the right exocanthion point. Then, the line connecting the alar point and tragion point is used to determine the X-axis of the coordinate system, and the line connecting the left exocanthion point and right exocanthion point is used to determine the Z-axis of the coordinate system. The midsagittal plane is determined by the glabella point, the pronasale point, and the pogonion point. The intersection point of the midsagittal plane and the mandibular alveolar ridge crest line is used as the coordinate origin O. The Y-axis of the coordinate system is perpendicular to the XOZ plane.

In some embodiments of the present disclosure, the step for determining the multiple preset planes is as follows: In the Y-axis direction of the coordinate system, determine multiple planes parallel to the XOZ plane with preset intervals. Determine the XOZ plane and the multiple planes parallel to the XOZ plane as the multiple preset planes.

As an example, in the Y-axis direction, multiple planes are selected at intervals of 0.2 mm. These multiple planes are parallel to the XOZ plane, and the distance between every two adjacent planes is 0.2 mm. Thus, multiple preset planes including the XOZ plane are obtained. Through the above steps, the coordinate system is established and multiple preset planes are determined. The preset planes are used to cut the mandibular closing motion trajectories. Each preset plane generates n intersection points with the n closing motion trajectories of the mandible.

Step 202, multiple closing motion trajectories of the mandible of the user are acquired.

As an example, attach at least three markers to the user's teeth or gingiva. Position the user's mandible based on the at least three markers, generating a transformation relationship between the markers and the mandible. In this example, acquiring the multiple closing motion trajectories of the mandible of the user includes: capturing motion trajectories of the at least three markers during multiple closing motions using a scanner; generating the multiple closing motion trajectories of the user based on the transformation relationship and the motion trajectories of the at least three markers.

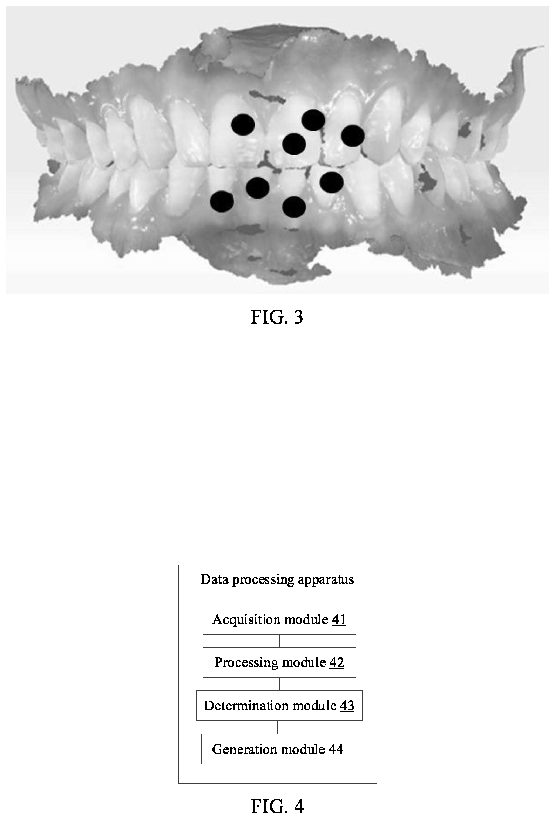

Referring to FIG. 3, FIG. 3 shows a schematic diagram of markers. As shown in FIG. 3, the upper dental arch has four markers attached, and the lower dental arch has four markers attached. Among them, the four markers on the same dental arch are not collinear. For the four markers on the lower dental arch, three-point positioning may be used to position the user's mandible by converting the positions of the markers into mandibular positional relationships. Then, during one closing motion, the scanner captures the motion trajectories of the markers. The motion trajectories of the markers represent the RT (rotation translation) data of the mandible relative to the maxilla, thereby obtaining the closing motion trajectory.

In some embodiments of the present disclosure, for the four markers on the upper dental arch, three-point positioning may be used to position the user's maxilla, to determine the intersection point of the midsagittal plane and the mandibular alveolar ridge crest line.

As another example, acquiring the multiple closing motion trajectories of the mandible user includes: extracting a mandibular alveolar ridge crest line and the midsagittal plane based on three-dimensional facial data of the user; calculating an intersection point B of the mandibular alveolar ridge crest line and the midsagittal plane; then, acquiring motion trajectories of the intersection point B during multiple closing motions to obtain the multiple closing motion trajectories of the mandible of the user.

In this example, the motion trajectory of the mandible is collected through corresponding acquisition equipment to obtain the muscular closure path. Corresponding acquisition equipment includes, for example, a mandibular motion tracking system.

Step 203, multiple intersection points between each of the multiple preset planes and the multiple closing motion trajectories are acquired.

Step 204, For each preset plane, a highest density point from the multiple intersection points is determined.

Step 205, the muscular closure path is obtained by connecting the multiple highest density points corresponding to the multiple preset planes.

The explanations for steps 102 to 104 in the foregoing embodiments also apply to steps 203 to 205.

According to the technical solution of this embodiment of the present disclosure, by establishing the coordinate system based on the user's three-dimensional facial data, intersecting the closing motion trajectories with planes parallel to the XOZ plane at preset intervals in the Y direction, then determining the highest density points from the intersection points, and generating the muscular closure path by connecting the highest density points, the accuracy of obtaining the muscular closure path is improved, enabling complete acquisition of the muscular closure path, reducing reliance on professional knowledge. Moreover, the position of the mandible may be displayed in real-time based on the muscular closure path. The operation process is simple, non-contact measurement is achieved, reducing discomfort for the measured user.

FIG. 4 is a structural diagram illustrating a data processing apparatus according to an embodiment of the present disclosure. As shown in FIG. 4, the data processing apparatus includes: an acquisition module 41, a processing module 42, a determination module 43, and a generation module 44.

The acquisition module 41 is configured to acquire multiple closing motion trajectories of a mandible of a user.

The processing module 42 is configured to acquire multiple intersection points between each of a plurality of preset planes and the plurality of closing motion trajectories.

The determination module 43 is configured to determine a highest density point from the plurality of intersection points for each preset plane.

The generation module 44 is configured to obtain a muscular closure path by connecting the multiple highest density points corresponding to the plurality of the preset planes.

In some embodiments of the present disclosure, the data processing apparatus further includes: an establishment module, configured to acquire three-dimensional facial data of the user, and determine an intersection point of a midsagittal plane and a mandibular alveolar ridge crest line, an alare point, a tragion point, a left exocanthion point, and a right exocanthion point based on the three-dimensional facial data; establish a coordinate system by using the intersection point of the midsagittal plane and the mandibular alveolar ridge crest line as a coordinate origin O, using a line connecting the alare point and the tragion point as a X-axis, and using a line connecting the left exocanthion point and the right exocanthion point as a Z-axis; where the preset planes include an XOZ plane.

In some embodiments of the present disclosure, the data processing apparatus further includes: a selection module, configured to, in a Y-axis direction of the coordinate system, determining a plurality of planes parallel to the XOZ plane at preset intervals; wherein the Y-axis is perpendicular to the XOZ plane; determining the XOZ plane and the multiple planes parallel to the XOZ plane as the plurality of the preset planes.

In some embodiments of the present disclosure, the data processing apparatus further includes: a positioning module, configured to at least three markers to teeth or gingiva of the user; position the mandible of the user based on the at least three markers and generating a transformation relationship between the at least three markers and the mandible;
the acquisition module 41 is specifically configured to: capture motion trajectories of the at least three markers during the user closing mouth motion for a plurality of times using a scanner; generate the multiple closing motion trajectories of the mandible of the user based on the transformation relationship and the motion trajectories of the at least three markers.

In some embodiments of the present disclosure, the acquisition module 41 is specifically configured to: extract a mandibular alveolar ridge crest line and a midsagittal plane based on three-dimensional facial data of the user; calculate an intersection point B of the mandibular alveolar ridge crest line and the midsagittal plane; obtain the plurality of closing motion trajectories of the mandible of the user by acquiring motion trajectories of the intersection point B during the user closing mouth motion for a plurality of times.

In some embodiments of the present disclosure, the determination module 43 is specifically configured to: determine distances from each intersection point to other intersection points among the plurality of the intersection points; obtain a density metric value of each intersection point by performing a weighted average of the distances from each intersection point to other intersection points among the plurality of the intersection points; determine, from the multiple intersection points, the intersection point with the largest density metric value as the highest density point.

The data processing apparatus provided by the embodiments of the present disclosure can execute any data processing method provided by the embodiments of the present disclosure, and has corresponding functional modules and beneficial effects for executing the method. Details not fully described in the apparatus embodiments of the present disclosure may refer to the description in any method embodiment of the present disclosure.

The present disclosure further provides an electronic device. The electronic device includes one or more processors and a memory. The processor may be a Central Processing Unit (CPU) or another form of processing unit having data processing capability and/or instruction execution capability, and may control other components in the electronic device to perform desired functions. The memory may include one or more computer program products. The computer program products may include various forms of computer-readable storage media, such as volatile memory and/or non-volatile memory. The volatile memory may include, for example, Random Access Memory (RAM) and/or cache memory. The non-volatile memory may include, for example, Read-Only Memory (ROM), a hard disk, flash memory, etc. One or more computer program instructions may be stored on the computer-readable storage medium. The processor may run the program instructions to implement the methods of the embodiments of the present disclosure described above and/or other desired functions. Various content such as input signals, signal components, noise components, etc., may also be stored in the computer-readable storage medium.

In one example, the electronic device may further include: an input device and an output device. These components are interconnected through a bus system and/or other forms of connection mechanisms. Furthermore, the input device may include, for example, a keyboard, a mouse, etc. The output device may output various information externally, including determined distance information, direction information, etc. The output device may include, for example, a display, a speaker, a printer, a communication network, and remote output devices connected thereto, etc. In addition, depending on the specific application, the electronic device may also include any other appropriate components such as a bus, input/output interfaces, etc.

In addition to the above methods and apparatus, embodiments of the present disclosure may also be a computer program product comprising computer program instructions. When the computer program instructions are executed by a processor, the processor is caused to perform any method provided by the embodiments of the present disclosure.

The computer program product may be written in any combination of one or more programming languages for executing the operations of the embodiments of the present disclosure. Programming languages include object-oriented programming languages such as Java, C++, etc., and conventional procedural programming languages such as the "C" language or similar programming languages. The program code may execute entirely on the user's computing device, partly on the user's device, as a stand-alone software package, partly on the user's computing device and partly on a remote computing device, or entirely on a remote computing device or server.

Furthermore, embodiments of the present disclosure may also be a computer-readable storage medium having computer program instructions stored thereon. When the computer program instructions are executed by a processor, the processor is caused to perform any method provided by the embodiments of the present disclosure.

The computer-readable storage medium may include any combination of one or more readable media. The readable medium may be a readable signal medium or a readable storage medium. The readable storage medium may include, for example, but is not limited to, electrical, magnetic, optical, electromagnetic, infrared, or semiconductor systems, apparatuses, or devices, or any suitable combination of the foregoing. More specific examples (a non-exhaustive list) of the readable storage medium include: electrical connections having one or more wires, portable disks, hard disks, random access memory (RAM), read-only memory (ROM), erasable programmable read-only memory (EPROM or flash memory), optical fiber, portable compact disk read-only memory (CD-ROM), optical storage devices, magnetic storage devices, or any suitable combination of the foregoing.

It should be noted that terms such as "first" and "second" are used herein only to distinguish one entity or operation from another entity or operation, and do not necessarily require or imply any actual such relationship or order between these entities or operations. Furthermore, the terms "comprises", "comprising", or any other variation thereof are intended to cover a non-exclusive inclusion, such that a process, method, article, or device that includes a list of elements includes not only those elements but may also include other elements not expressly listed or inherent to such process, method, article, or device. Without more constraints, an element defined by the phrase "comprising a ..." does not preclude the existence of additional identical elements in the process, method, article, or device that includes the element.

The above description is only specific embodiments of the present disclosure to enable those skilled in the art to understand or implement the present disclosure. Various modifications to these embodiments will be readily apparent to those skilled in the art, and the general principles defined herein may be implemented in other embodiments without departing from the spirit or scope of the present disclosure. Therefore, the present disclosure is not limited to the embodiments described herein but is to be accorded the widest scope consistent with the principles and novel features disclosed herein.

INDUSTRIAL APPLICABILITY

The technical method provided in this disclosure may be applied to the field of data processing technology. In the embodiments of this disclosure, multiple closing motion trajectories of a mandible of a user are acquired, multiple intersection points between each of a plurality of preset planes and the plurality of closing motion trajectories are obtained, and for each preset plane, a highest density point from the plurality of intersection points is determined. Subsequently, the highest density points corresponding to the multiple preset planes are connected to generate the muscular closure path. As a result, the muscular closure path may be calculated based on the motion trajectories, thereby improving the accuracy of muscular closure path acquisition. Furthermore, the operational process is simple, eliminates the need for contact-based measurement, and reduces discomfort for the subject.

**Claims**

1. A data processing method, comprising:

   acquiring a plurality of closing motion trajectories of a mandible of a user;
   acquiring a plurality of intersection points between each of a plurality of preset planes and the plurality of closing motion trajectories;
   determining a highest density point from the plurality of intersection points for each preset plane;
   obtaining a muscular closure path by connecting a plurality of highest density points corresponding to the plurality of the preset planes.

2. The method according to claim 1, wherein before acquiring the plurality of intersection points between each of the plurality of preset planes and the plurality of closing motion trajectories, the method further comprises:

   acquiring three-dimensional facial data of the user, and determining an intersection point of a midsagittal plane and a maxillary ridge crest line, an alare point, a tragion point, a left exocanthion point, and a right exocanthion point based on the three-dimensional facial data;
   establishing a coordinate system by using the intersection point of the midsagittal plane and the maxillary ridge crest line as a coordinate origin O, using a line connecting the alare point and the tragion point as a X-axis, and using a line connecting the left exocanthion point and the right exocanthion point as a Z-axis; wherein the preset planes comprise an XOZ plane.

3. The method according to claim 2, wherein after establishing the coordinate system, the method further comprises:

   in a Y-axis direction of the coordinate system, determining a plurality of planes parallel to the XOZ plane at preset intervals; wherein the Y-axis is perpendicular to the XOZ plane;
   determining the XOZ plane and the plurality of planes parallel to the XOZ plane as the plurality of the preset planes.

4. The method according to claim 1, further comprising:

  attaching at least three markers to teeth or gingiva of the user;
  positioning the mandible of the user based on the at least three markers and generating a transformation relationship between the at least three markers and the mandible;
  wherein acquiring the plurality of the closing motion trajectories of the mandible of the user comprises:

    capturing motion trajectories of the at least three markers during the user closing mouth for a plurality of times using a scanner;
    generating the plurality of closing motion trajectories of the mandible of the user based on the transformation relationship and the motion trajectories of the at least three markers.

5. The method according to claim 1, wherein the acquiring the plurality of closing motion trajectories of the mandible of the user comprises:

  extracting a maxillary ridge crest line and a midsagittal plane based on three-dimensional facial data of the user;
  calculating an intersection point B of the maxillary ridge crest line and the midsagittal plane;
  obtaining the plurality of closing motion trajectories of the mandible of the user by acquiring motion trajectories of the intersection point B during the user closing mouth for a plurality of times.

6. The method according to claim 1, wherein determining the highest density point from the plurality of intersection points comprises:

  determining distances from each intersection point to other intersection points among the plurality of the intersection points;
  obtaining a density metric value of each intersection point by performing a weighted average of the distances from each intersection point to other intersection points among the plurality of the intersection points;
  determining, from the plurality of the intersection points, the intersection point with the largest density metric value as the highest density point.

7. A data processing apparatus, comprising:

  an acquisition module, configured to acquire a plurality of closing motion trajectories of a mandible of a user;
  a processing module, configured to acquire a plurality of intersection points between each of a plurality of preset planes and the plurality of closing motion trajectories;
  a determination module, configured to determine the highest density point from the plurality of intersection points for each preset plane;
  a generation module, configured to obtain a muscular closure path by connecting the multiple highest density points corresponding to the plurality of the preset planes.

8. The apparatus according to claim 7, further comprising:

  an establishment module, configured to acquire three-dimensional facial data of the user, and determining an intersection point of a midsagittal plane and a maxillary ridge crest line, an alare point, a tragion point, a left exocanthion point, and a right exocanthion point based on the three-dimensional facial data;
  establish a coordinate system by using the intersection point of the midsagittal plane and the maxillary ridge crest line as a coordinate origin O, using a line connecting the alare point and the tragion point as a X-axis, and using a line connecting the left exocanthion point and the right exocanthion point as a Z-axis; wherein the preset planes comprise an XOZ plane.

9. An electronic device, comprising:

  a processor;
  a memory configured to store executable instructions for the processor;
  wherein the processor is configured to read the executable instructions from the memory and execute the executable instructions to implement the data processing method according to any one of claims 1-6.

10. A computer-readable storage medium, storing a computer program, wherein the computer program, when executed by a processor, implements the data processing method according to any one of claims 1-6.

Acquire multiple closing motion trajectories of a mandible of a user | 101

Acquire multiple intersection points between each of multiple preset planes and the multiple closing motion trajectories | 102

Determine a highest density point from the multiple intersection points for each preset plane | 103

Obtain a muscular closure path by connecting the multiple highest density points corresponding to the multiple preset planes | 104

FIG. 1

Establish a coordinate system | 201

Acquire multiple closing motion trajectories of the mandible of the user | 202

Acquire multiple intersection points between each of the multiple preset planes and the multiple closing motion trajectories | 203

For each preset plane, determine a highest density point from the multiple intersection points | 204

Obtain the muscular closure path by connecting the multiple highest density points corresponding to the multiple preset planes | 205

FIG. 2

FIG. 3

FIG. 4

## INTERNATIONAL SEARCH REPORT

| | International application No. |
|---|---|
| | **PCT/CN2024/109629** |

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 下颌, 闭口, 轨迹, 平面, 交点, 密度, lower jaw, close, mouth, trajectory, plane, intersection point, density

**C. DOCUMENTS CONSIDERED TO BE RELEVANT**

| Category* | Citation of document, with indication, where appropriate, of the relevant passages | Relevant to claim No. |
|---|---|---|
| X | CN 116269889 A (PEKING UNIVERSITY SCHOOL OF STOMATOLOGY) 23 June 2023 (2023-06-23) <br> description, paragraphs 0054-0075, and figures 1-12 | 1-10 |
| A | CN 115429474 A (SHINING 3D TECHNOLOGY CO., LTD.) 06 December 2022 (2022-12-06) <br> entire document | 1-10 |
| A | CN 115018881 A (SHINING 3D TECHNOLOGY CO., LTD.) 06 September 2022 (2022-09-06) <br> entire document | 1-10 |
| A | JP 2010142285 A (YOSHIDA SEISAKUSHO K. K.) 01 July 2010 (2010-07-01) <br> entire document | 1-10 |
| A | WO 2021090921 A1 (OSAKA UNIVERSITY et al.) 14 May 2021 (2021-05-14) <br> entire document | 1-10 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 October 2024** | **12 October 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/109629**

| Patent document cited in search report | | | Publication date (day/month/year) | Patent family member(s) | | | Publication date (day/month/year) |
|---|---|---|---|---|---|---|---|
| CN | 116269889 | A | 23 June 2023 | None | | | |
| CN | 115429474 | A | 06 December 2022 | None | | | |
| CN | 115018881 | A | 06 September 2022 | WO | 2023241705 | A1 | 21 December 2023 |
| JP | 2010142285 | A | 01 July 2010 | None | | | |
| WO | 2021090921 | A1 | 14 May 2021 | JP | 2022074153 | A | 17 May 2022 |

**REFERENCES CITED IN THE DESCRIPTION**

**Patent documents cited in the description**

- CN 202310969399